# EUROPÄISCHE PATENTSCHRIFT

(11) **EP 2 995 837 B1**
(45) Veröffentlichungstag und Bekanntmachung des Hinweises auf die Patenterteilung: **06.11.2019**
(21) Anmeldenummer: 15175056.9
(22) Anmeldetag: 02.07.2015
(51) Int. Cl.: F16L 11/15

(54) **KÄLTEMITTELLEITUNG**
COOLANT PIPE
CONDUITE DE FLUIDE FRIGORIGÈNE

(30) Priorität: 13.08.2014 DE 102014216047
(43) Veröffentlichungstag der Anmeldung: 16.03.2016
(73) Patentinhaber: MIMplus Technologies GmbH & Co. KG, 75228 Ispringen (DE)
(72) Erfinder: Burkhardt, Carlo, 75331 Engelsbrand (DE); Heil, Bernhard, 75179 Pforzheim (DE); Ilg, Carsten, 75245 Neulingen (DE)
(74) Vertreter: Kordel, Mattias

(56) Entgegenhaltungen:
- DE-A1- 3 742 195
- DE-A1- 19 728 383
- DE-B3-102008 039 991
- DE-U1-202010 014 350
- US-A1- 2004 090 065

## Beschreibung

### Beschreibung

Es wird eine Kältemittelleitung für mit Kohlendioxid als Kältemittel betriebene Klimaanlagen, insbesondere Klimaanlagen von Kraftfahrzeugen, angegeben, deren mindestens eines Ende, vorzugsweise beiden Enden dicht mit Anschlussteilen versehen sind. Dabei weist die Leitung einen inneren, kältemitteldichten Wellschlauch, einen diesen mit radialem Abstand umgebenden, radial druckfesten flexiblen Mantel aus einem Kunstfasergeflecht bzw. -gewebe als Axialabstützung auf, der einen negativen Temperaturausdehnungskoeffizienten bei Betriebstemperatur von 180°C bezogen auf Raumtemperatur und eine festigkeits- und beweglichkeitsoptimierte Geometrie durch die Kombination von geringer Fadenstärke zwischen 100-600 dtex (1 dtex bedeutet, dass ein Kilometer der Faser ein Gramm wiegt; 1 dtex = 1g/km) mit einem Bedeckungsgrad von mindestens 98% verwoben in 48-64 Klöppel mit mindestens 4 und höchstens 24 Fäden in einer bevorzugten Ausführung 48 Klöppel x 8 Fäden bei einem Fasergewicht von 322 dtex (48x8x322) zur Gewährleistung maximaler Festigkeit unter Innendruck bei gleichzeitiger Verhinderung des Eindringens von Schmutzpartikeln und der Aufnahme von Feuchtigkeit im Betrieb, einer Beschichtung zur Erhöhung der UV-Beständigkeit, bevorzugt in schwarz oder dunkelgrau, einer Kunststoffkaschierung zur Erhöhung des Reibwerts auf der Außenseite zur Erhöhung der Festigkeit und der Verhinderung des Eindringens von Schmutzpartikeln und der Aufnahme von Feuchtigkeit im Betrieb, festgelegt durch eine Verpressverbindung, bevorzugt im Elektromagnetischen Pulsverfahren (EMP) auf dem mit einem metallischen Anschlusstück versehenen austenitischen rostfreien Ringwellschlauch, so dass eine Kältemittelleitung entsteht, die einen minimalen Berstdruck von 34 MPa, eine axiale Längung von nicht mehr als 2% bezogen auf die flexible Ausgangslänge über die gesamten Betriebsbedingungen und eine axiale Abzugskraft des Kunststoffmantels unter der Endhülse von mindestens 2 kN bei Raumtemperatur aufweist.

Die Erfindung betrifft eine Kältemittelleitung für mit Kohlendioxid als Kältemittel betriebene Klimaanlagen, insbesondere Klimaanlagen von Kraftfahrzeugen, wobei die Leitung zumindest an einem Ende, vorzugsweise an beiden Enden dicht mit Anschlußteilen zur Verbindung mit weiterführenden Bauteilen versehen, insbesondere verschweißt ist.

Klimaanlagen insbesondere von Kraftfahrzeugen werden bisher mit fluorchlorkohlenwasserstoffhaltigen Kältemitteln betrieben, wobei wegen dessen verhältnismäßig niedrigem Druck im Bereich von 30 bis 40 Bar keine Probleme in der Verwendung von flexiblen Kältemittelleitungen in Form von Elastomerschläuchen bestehen, die bei Kraftfahrzeugen wegen der Relativbeweglichkeit miteinander zu verbindender Teile und zum Zwecke der Dämpfung auftretender Schwingungen erwünscht bzw. notwendig sind.

Nunmehr besteht jedoch zunehmend die Forderung, aus Gründen des Umweltschutzes und wegen der leichteren Entsorgung Kohlendioxid als Kältemittel zu verwenden. Da dieses jedoch in verflüssigtem Zustand einzusetzen ist, steht es unter einem erheblichen Druck im Bereich von bis zu 200 Bar und bei einer Temperatur von bis zu 200°C, so dass die bekannten flexiblen Elastomerschläuche nicht mehr eingesetzt werden können. Vielmehr müssen entsprechend druckstabile starre Glattleitungen eingesetzt werden, mit Hilfe derer sich jedoch Relativbewegungen kaum aufnehmen lassen. Außerdem stoßen die an den Enden solcher Leitungen durch Schweißen anzubringenden Anschlussteile wegen der auftretenden Schwingungen auf Stabilitätsprobleme.

Aufgabe der Erfindung ist es daher, eine Kältemittelleitung der eingangs genannten Art als flexible Leitung auszubilden, so dass sie in dem erforderlichen Umfang Relativbewegungen benachbarter Teile aufnehmen und insbesondere vom Verdichter für das Kältemittel herrührende Schwingungen dämpfen kann.

Diese Aufgabe ist erfindungsgemäß dadurch gelöst, dass die Leitung einen inneren, kältemitteldichten und mit den Anschlussteilen verbundenen Wellschlauch aus Metall aufweist, dass der Wellschlauch mit radialem Abstand von einer radial druckfesten, mit den Anschlussteilen verbundenen Axialabstützung in Form eines flexiblen Mantels aus einem temperaturbeständigen Kunststoff - vorzugsweise Aramid - umgeben ist.

Diese Maßnahmen haben die Wirkung, dass nunmehr der Wellschlauch als bekanntermaßen flexibles Bauteil die gasdichte Führung des Kältemittels übernehmen kann. Da er jedoch den hohen Drücken nicht allein Stand zu halten vermag, ist ihm ein radial druckfester, flexibler Mantel beigegeben, der gleichermaßen die Axialkräfte abstützt, die der Wellschlauch entwickelt, indem er sich unter Innendruckbelastung zu längen sucht. Damit allerdings eine ungünstige Reibpaarung zwischen Wellschlauch und einem Metallgeflecht, wie sonst allgemein in Industrieanwendungen üblich und in der EN ISO 10380 für druckbeaufschlagte Leitungen normativ beschrieben ist, die aber unter den auftretenden Schwingungen zur Zerstörung der radial außenliegenden Wellenberge des Wellschlauches führen würden, ist dieser radial druckfeste, flexible Mantel in als Kunststoff- und eben nicht Metallgeflecht oder -gewebe so ausgeführt, um die erforderlichen radialen Stützkräfte zwischen Wellschlauch und Metallmantel zu übertragen gleichzeitig die Aufgabe eines Dämpfungsgliedes für die auftretenden Schwingungen, insbesondere vom Kältemittelverdichter kommende Pulsationen übernimmt.

Insgesamt ist so ein für hohe Drücke geeignetes Leitungselement geschaffen, das in dem erforderlichen Maße flexibel ist und gleichzeitig der Dämpfung auftretender Schwingungs- und Druckpulsationsbelastungen dient.

Der Wellschlauch könnte ein schraubengangförmig gewellter Metallschlauch sein. Wegen der sich damit bei hohen Innendrücken ergebenden Torsionsbewegungen zwischen den Enden des Metallschlauches ist es jedoch zweckmäßig, daß der Wellschlauch ein Ringwellschlauch aus Edelstahl ist.

Was den Kunststoffmantel betrifft, so kann dies ein Geflechtsschlauch oder ein Gestrickschlauch sein, wobei jedoch einem Geflechtsschlauch wegen seiner Fähigkeit zur Aufnahme höherer Stützkräfte der Vorzug gegeben wird. Ein solcher Geflechtsschlauch legt sich bekanntermaßen unter der vom Wellschlauch ausgeübten Streckbelastung von außen fest gegen ihn an, so dass er dann in üblicherweise ausreichendem Maße in der Lage ist, aus der hohen Innen-druckbelastung des Wellschlauches herrührende Radialbelastungen abzustützen.

Die erfindungsgemäße Kältemittelleitung weist einen negativen Temperaturausdehnungskoeffizienten bei Betriebstemperatur von 180° bezogen auf Raumtemperatur auf, weil diese Materialeigenschaft des Kunststoffgeflechts die Radial- und Axialabstützung unter Innendruckbelastung bei hohen Betriebstemperaturen weiter verbessert, und besteht vorzugsweise aus Aramidfasern.

Dieser Geflechtsschlauch hat ein Fasergewicht zwischen 100 und 600 dtex (1 dtex entspricht einem Fasergewicht von einem Gramm auf einen Kilometer Faserlänge) mit einem Bedeckungsgrad von mindestens 98% verwoben in 48-64 Klöppel mit mindestens 4 und höchstens 24 Fäden, eine besonders vorteilhafte Ausführung hat dabei die Geometrie 48 Klöppel x 8 Fäden x 322 dtex. Diese gewährleistet maximale Festigkeit unter Innendruck bei gleichzeitiger Verhinderung des Eindringens von Schmutzpartikeln und der Aufnahme von Feuchtigkeit im Betrieb. Eine derartige Ausgestaltung des Geflechtsschlauchs verhindert auch die bei konventionellen Schlauchleitungen, bestehend aus Metallschläuchen mit Metallgeflecht, gefürchtete Fensterbildung im Geflecht, die bei vorgebogenem Einbau unter kombinierter Innendruck- und Bewegungsbelastung, wie sie in der vorgesehenen Anwendung als Kältemittelleitung für mit Kohlendioxid als Kältemittel betriebene Klimaanlagen üblich ist, zu einem schlagartigen Versagen der Leitung führen kann.

Was die Farbe des Kunststoffmantels betrifft, so ist zur Erhöhung der UV-Beständigkeit, bevorzugt schwarz oder dunkelgrau zu wählen. Vorteilhaft ist außerdem eine Kunststoffkaschierung zur Erhöhung des Reibwerts auf der Außenseite sowie zur Erhöhung der Festigkeit und der Verhinderung des Eindringens von Schmutzpartikeln und der Aufnahme von Feuchtigkeit im Betrieb.

Die Festlegung des Kunststoffmantels kann durch die einfache Verpressverbindung einer Endhülse erfolgen, die bevorzugt aber nicht ausschließlich aus einem Edelstahl- oder Aluminiumwerkstoff hergestellt sein kann. Dem Vorzug gegeben wird hier aber die Festlegung des Kunststoffmantels durch eine Verpressverbindung bevorzugt im Elektromagnetischen Pulsverfahren (EMP) auf dem mit einem metallischen Anschlussstück versehenen austenitischen rostfreien Ringwellschlauch.

Was das Material der Endhülse betrifft, so kann diese aus einem rostfreien Stahl bestehen, falls eine Verpressverbindung erfolgt, bei Einsatz des bevorzugten Elektromagnetischen Pulsverfahrens ist diese bevorzugt aus einer Aluminium- oder Kupferlegierung auszuführen, wobei es zweckmäßig sein kann, aus Korrosionsgründen diese mit einer Korrosionsschutzschicht zu versehen (z.B. galvanisch oder durch Lackieren).

Was die Anschlussteile für die Kältemittelleitung betrifft, so ist es zweckmäßig, wenn dies Metallrohrstücke mit einem im Bereich des leitungsseitigen Endes angebrachten, radial nach außen vorstehenden Bund sind, mit dessen radial innenliegendem Fuß der Wellschlauch und mit dessen Umfangsfläche der Mantel verbunden, insbesondere verschweißt sind. Dabei ist es vorteilhaft, Wellschlauch und Anschlussteil durch Laserschweißen miteinander zu verbinden.

Wie sich aus dem Vorstehenden ergibt, entsteht so eine eine Kältemittelleitung, die einen minimalen Berstdruck von 34 MPa, eine axiale Längung von nicht mehr als 2% bezogen auf die flexible Ausgangslänge über die gesamten Betriebsbedingungen und eine axiale Abzugskraft des Kunststoffmantels unter der Endhülse von mindestens 2 kN bei Raumtemperatur aufweist.

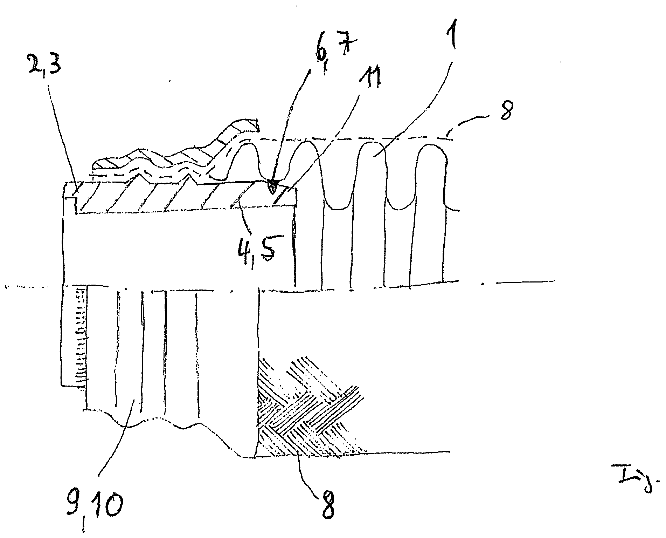

Weitere erfindungswesentliche Merkmale und Einzelheiten ergeben sich aus der nachfolgenden Beschreibung einer Ausführungsform, die in der Zeichnung im Axialschnitt dargestellt ist.

Die einzige Figur zeigt einen Ringwellschlauch 1 aus Edelstahl im Teillängsschnitt, der endständig mit Anschlussteilen 2, 3 durch Laserschweißnähte 6, 7 verbunden ist. Die Anschlussteile 2, 3 bestehen aus Rohrstücken deren äußeres freies Ende als Anschweißende für weiterführende Bauteile ausgebildet sein kann. Im Bereich der Enden des Wellschlauches 1 sind die Anschlussteile 2, 3 so ausgebildet, dass die Rohrstücke mit einem endständig verbleibenden Abschnitt 4, 5 noch in die Enden des Wellschlauches 1 ragen, diesen dabei auf seiner Innenseite halten und gleichzeitig die Anbringung der Schweißnähte 6, 7 erleichtern.

Anliegend am Außenumfang des Wellschlauches 1 ist ein flexibler Mantel 8 aus Kunststoff vorgesehen, der mit seinen Enden durch eine Verpressverbindung der Hülsen 9, 10, beispielsweise durch Elektromagnetisches Pulsverfahren auf der Umfangsfläche des jeweils zugeordneten Anschlussteils 2, 3 festgelegt ist.

Der flexible Mantel 8 ist bezüglich Radial- und Axialbelastung praktisch starr, so dass er vom Wellschlauch 1 unter hoher Innendruckbelastung ausgehende axiale Längung bzw. radiale Aufweitung abstützen kann. Damit in diesem Zusammenhang eine abrieberzeugende Paarung zwischen Wellschlauch 1 und flexiblem Mantel 10 vermieden ist, ist die Werkstoffpaarung zwischen Metallschlauch und Kunststoffmantel so ausgelegt, dass über den gesamten Temperaturbereich eine optimale Gleitwirkung zwischen den beiden Reibpartnern sichergestellt ist.

Die soweit dargestellte und beschriebene Kältemittelleitung ist flexibel, andererseits aber auch zur Aufnahme eines unter hohem Druck stehenden Kältemittels geeignet. Wegen ihrer Gestaltung und insbesondere der negativen Temperaturausdehnungskoeffizienten des Kunststoffmantels bei erhöhten Betriebstemperaturen bis 180°C bezogen auf Raumtemperatur kann sie auftretende Schwingungen, insbesondere Druckpulsationen von Seiten des Kältemittelverdichters dämpfen.

Da der Wellschlauch 1 sowohl radial als auch axial abgestützt ist, kann er trotz der aufzunehmenden hohen Innendruckbelastung verhältnismäßig dünnwandig und damit hochflexibel ausgeführt sein.

## Patentansprüche

1. Kältemittelleitung für mit Kohlendioxid als Kältemittel betriebene Klimaanlagen, insbesondere Klimaanlagen von Kraftfahrzeugen, wobei die Leitung an mindestens einem, vorzugsweise an beiden Enden dicht mit Anschlussteilen zur Verbindung mit weiterführenden Bauteilen versehen, insbesondere verschweißt ist, wobei die Leitung einen inneren, kältemitteldichten und mit den Anschlussteilen (2, 3) verbundenen Wellschlauch (1) aus Metall aufweist, und der Wellschlauch (1) mit radialem Abstand von einer radial druckfesten, mit den Anschlussteilen (2, 3) verbundenen Axialabstützung in Form eines flexiblen Mantels (8) aus Kunststoff umgeben ist, wobei der flexible Mantel ein Geflechtsschlauch oder ein Gestrickschlauch ist, **dadurch gekennzeichnet, dass** der Mantel (8) einen negativen Temperaturausdehnungskoeffizienten bei Betriebstemperatur von 180°C bezogen auf Raumtemperatur und eine festigkeits- und beweglichkeitsoptimierte Geometrie durch die Kombination von geringem Fasergewicht zwischen 100 und 600 dtex mit einem Bedeckungsgrad von mindestens 98% verwoben in 48-64 Klöppel mit mindestens 4 und höchstens 24 Fäden aufweist.

2. Kältemittelleitung nach Anspruch 1, **dadurch gekennzeichnet, dass** der Wellschlauch (1) ein Ringwellschlauch vorzugsweise aus Edelstahl ist.

3. Kältemittelleitung nach Anspruch 1 oder 2, **dadurch gekennzeichnet, dass** der flexible Mantel (8) ein Geflechtsschlauch oder ein Gestrickschlauch aus Aramidfasern ist.

4. Kältemittelleitung nach Anspruch 1 oder 2, **dadurch gekennzeichnet, dass** der flexible Mantel (8) ein Geflechtsschlauch oder ein Gestrickschlauch aus Vectran, Dynema, Carbon, E-Glas, Basalt ist oder aus einer Faserkombination besteht, die eines oder mehrere der in Anspruch 3 und/oder 4 aufgeführten Materialien enthält.

5. Kältemittelleitung nach Anspruch 1 oder 2, **dadurch gekennzeichnet, dass** der flexible Mantel (8) zur Erhöhung der UV-Beständigkeit bevorzugt in schwarz oder grau ausgeführt ist.

6. Kältemittelleitung nach Anspruch 1 oder 2, **dadurch gekennzeichnet, dass** der flexible Mantel (8) zur Erhöhung der UV-Beständigkeit mit einer UV-beständigen Beschichtung ausgeführt ist.

7. Kältemittelleitung nach Anspruch 1 oder 2, **dadurch gekennzeichnet, dass** der flexible Mantel (8) eine Beschichtung bzw. eine Kaschierung zur Erhöhung des Reibwerts auf der Außenseite und vorzugsweise der Verhinderung des Eindringens von Schmutzpartikeln bzw. der Aufnahme von Feuchtigkeit im Betrieb aufweist

8. Kältemittelleitung nach einem oder mehreren der Ansprüche 1 bis 6, **dadurch gekennzeichnet, dass** der flexible Mantel (8) in einer Ausführung 48 Klöppel x 8 Fäden x 322 dtex Fasergewicht, ausgeführt wird.

9. Kältemittelleitung nach Anspruch 1 oder 2, **dadurch gekennzeichnet, dass** der flexible Mantel (8) durch eine mechanische Verpressverbindung mittels der Hülsen (9, 10) auf dem mit einem metallischen Anschlussstück (2, 3) versehenen Ringwellschlauch (1) festgelegt wird, wobei der Ringwellenschlauch vorzugsweise aus austenitischem, rostfreien Material besteht.

10. Kältemittelleitung nach Anspruch 1 bis 9, **dadurch gekennzeichnet, dass** der flexible Mantel (8) durch eine mechanische Verpressverbindung mittels der Hülsen (9, 10) bevorzugt im Elektromagnetischen Pulsverfahren (EMP) auf dem mit einem metallischen Anschlussstück (2, 3) versehenen Ringwellschlauch (1) festgelegt wird, wobei der Ringwellenschlauch vorzugsweise aus austenitischem, rostfreien Material besteht.

11. Kältemittelleitung nach Anspruch 1 bis 10, **dadurch gekennzeichnet, dass** die metallischen Hülsen (9, 10) zur Festlegung des Mantels Kupfer oder eine Kupferlegierung aufweisen, vorzugsweise aus diesen Materialien bestehen.

12. Kältemittelleitung nach Anspruch 10 oder 11, **dadurch gekennzeichnet, dass** die metallischen Hülsen (9, 10) zur Festlegung des Mantels Aluminium oder eine Aluminiumlegierung aufweisen, vorzugsweise aus diesen Materialien bestehen.

13. Kältemittelleitung nach Anspruch 10 oder 11, **dadurch gekennzeichnet, dass** die metallischen Hülsen (9, 10) zur Festlegung des Mantels mit einer korrosionsbeständigen Beschichtung versehen sind.

14. Kältemittelleitung nach einem oder mehreren der Ansprüche 1 bis 13, **dadurch gekennzeichnet, dass** die Anschlussteile (2, 3) und der Wellschlauch (1) verbunden, insbesondere verschweißt sind.

15. Kältemittelleitung nach Anspruch 12, **dadurch gekennzeichnet, dass** die Anschlussstücke (2, 3) in den benachbarten Endbereich des Wellschlauches (1) ragen (Abschnitte 4, 5) und einen dessen Innendurchmesser entsprechenden Außendurchmesser aufweisen.

16. Kältemittelleitung nach Anspruch 12, **dadurch gekennzeichnet, dass** die Anschlussstücke (2, 3) in den benachbarten Endbereich des Wellschlauches (1) ragen (Abschnitte 4, 5) und dabei eine Einformschräge (11) vorzugsweise zwischen 1° und 6° aufweisen.

17. Kältemittelleitung nach einem der Ansprüche 14 bis 16, **dadurch gekennzeichnet, dass** die Anschlussteile (2, 3) aus Edelstahl hergestellt sind.

18. Kältemittelleitung nach einem oder mehreren der Ansprüche 1 bis 17, **dadurch gekennzeichnet dass** eine Kältemittelleitung entsteht, die einen minimalen Berstdruck von 34 MPa, eine axiale Längung von nicht mehr als 2% bezogen auf die flexible Ausgangslänge über die gesamten Betriebsbedingungen und eine axiale Abzugskraft des Kunststoffmantels unter der Endhülse von mindestens 2 kN bei Raumtemperatur aufweist.

## Claims

1. A refrigerant pipe for air-conditioning systems operated with carbon dioxide as refrigerant, in particular air-conditioning systems of motor vehicles, wherein, on at least one, preferably on both ends, the pipe is tightly provided with connecting parts for connection to onward-leading components, in particular welded thereto, wherein the pipe has an inner corrugated hose (1) made of metal, which is impervious to refrigerant and which is connected to the connecting parts (2, 3), and the corrugated hose (1) is surrounded at a radial distance by an axial support in the form of a flexible jacket (8) made of plastic, which is radially pressure-resistant and which is connected to the connecting parts (2, 3), wherein the flexible jacket is a braided hose or a knitted hose, **characterised in that** the jacket (8) has a negative temperature expansion coefficient at operating temperature of 180°C, based on room temperature, and a strength- and movement-optimized geometry by the combination of low fibre weight of between 100 and 600 dtex with a degree of coverage of at least 98%, interwoven in 48-64 rabbits with at least 4 and maximally 24 threads.

2. The refrigerant pipe according to claim 1, **characterised in that** the corrugated hose (1) is an annular corrugated hose preferably made of stainless steel.

3. The refrigerant pipe according to claim 1 or 2, **characterised in that** the flexible jacket (8) is a braided hose or a knitted hose made of aramid fibres.

4. The refrigerant pipe according to claim 1 or 2, **characterised in that** the flexible jacket (8) is a braided hose or a knitted hose made of Vectran, Dynema, carbon, E-glass, basalt or consists of a fibre combination, which includes one or a plurality of the materials listed in claim 3 and/or 4.

5. The refrigerant pipe according to claim 1 or 2, **characterised in that** the flexible jacket (8) is preferably designed in black or grey in order to increase the UV resistance.

6. The refrigerant pipe according to claim 1 or 2, **characterised in that** the flexible jacket (8) is designed with a UV-resistant coating in order to increase the UV resistance.

7. The refrigerant pipe according to claim 1 or 2, **characterised in that** the flexible jacket (8) has a coating or a lining, respectively, in order to increase the coefficient of friction on the outer side and preferably in order to reduce the penetration of dirt particles or the absorption of moisture, respectively, during operation.

8. The refrigerant pipe according to any one or a plurality of claims 1 to 6, **characterised in that** the flexible jacket (8) is designed in a design of 48 rabbits x 8 threads x 322 dtex of fibre weight.

9. The refrigerant pipe according to claim 1 or 2, **characterised in that** the flexible jacket (8) is secured to the annular corrugated hose (1), which is provided with a metallic connecting piece (2, 3), by means of a mechanical crimp connection by means of the sleeves (9, 10), wherein the annular corrugated hose preferably consists of austenitic, rust-free material.

10. The refrigerant pipe according to claim 1 to 9, **characterised in that** the flexible jacket (8) is secured to the annular corrugated hose (1), which is provided with a metallic connecting piece (2, 3), by means of a mechanical crimp connection by means of the sleeves (9, 10), preferably in the electromagnetic pulse method (EMP), wherein the annular corrugated hose preferably consists of austenitic, rust-free material.

11. The refrigerant pipe according to claim 1 to 10, **characterised in that** the metallic sleeves (9, 10) for securing the jacket have copper or a copper alloy, preferably consist of these materials.

12. The refrigerant pipe according to claim 10 or 11, **characterised in that** the metallic sleeves (9, 10) for securing the jacket have aluminium or an aluminium alloy, preferably consist of these materials.

13. The refrigerant pipe according to claim 10 or 11, **characterised in that** the metallic sleeves (9, 10) for securing the jacket are provided with a corrosion-resistant coating.

14. The refrigerant pipe according to any one or a plurality of claims 1 to 13, **characterised in that** the connecting parts (2, 3) and the corrugated hose (1) are connected, in particular welded.

15. The refrigerant pipe according to claim 12, **characterised in that** the connecting pieces (2, 3) protrude into the adjacent end region of the corrugated hose (1) (sections 4, 5) and have an outer diameter corresponding to the inner diameter thereof.

16. The refrigerant pipe according to claim 12, **characterised in that** the connecting pieces (2, 3) protrude into the adjacent end region of the corrugated hose (1) (sections 4, 5) and thereby have a moulding bevel (11) of preferably between 1° and 6°.

17. The refrigerant pipe according to any one of claims 14 to 16, **characterised in that** the connecting pieces (2, 3) are made of stainless steel.

18. The refrigerant pipe according to any one or a plurality of claims 1 to 17, **characterised in that** a refrigerant pipe is created, which has a minimal bursting pressure of 34 MPa, an axial elongation of not more than 2%, based on the flexible initial length across all of the operating conditions, and an axial pull-off force of the plastic jacket below the end sleeve of at least 2 kN at room temperature.

## Revendications

1. Conduite de fluide frigorigène pour climatisations fonctionnant avec du dioxyde de carbone comme fluide frigorigène, en particulier les climatisations de véhicules motorisés, la conduite étant, au moins à une, de préférence aux deux extrémités, pourvue de pièces de raccordement permettant une liaison avec des composants supplémentaires, en particulier soudée avec celles-ci, la conduite présentant un tuyau ondulé (1) en métal, intérieur, étanche au fluide frigorigène et relié aux pièces de raccordement (2, 3) et le tuyau ondulé (1) étant entouré à une distance radiale d'un support axial résistant à la pression sur le plan radial et relié aux pièces de raccordement (2, 3), sous la forme d'une gaine souple (8) en matière synthétique, la gaine souple étant une gaine tressée ou une gaine tricotée, **caractérisée en ce que** la gaine (8) présente un coefficient de dilatation thermique négatif à une température de service de 180°C par rapport à la température ambiante et une géométrie avec optimisation de la résistance et de la mobilité par la combinaison d'un faible poids de fibre compris entre 100 et 600 dtex et d'un degré de couverture d'au moins 98%, tissé en 48 à 64 fuseaux avec minimum 4 et maximum 24 fils.

2. Conduite de fluide frigorigène conformément à la revendication 1, **caractérisée en ce que** le tuyau ondulé (1) est un tuyau ondulé annulaire, de préférence en acier inoxydable.

3. Conduite de fluide frigorigène conformément à la revendication 1 ou 2, **caractérisée en ce que** la gaine souple (8) est une gaine tressée ou une gaine tricotée en fibres d'aramide.

4. Conduite de fluide frigorigène conformément à la revendication 1 ou 2, **caractérisée en ce que** la gaine souple (8) est une gaine tressée ou une gaine tricotée en Vectran, Dynema, carbone, E-Glas, basalte ou se compose d'une combinaison de fibres qui contient une ou plusieurs matières citées dans la revendication 3 et/ou 4.

5. Conduite de fluide frigorigène conformément à la revendication 1 ou 2, **caractérisée en ce que** la gaine souple (8) est conçue pour augmenter la résistance aux ultraviolets, de préférence en noir ou en gris.

6. Conduite de fluide frigorigène conformément à la revendication 1 ou 2, **caractérisée en ce que** la gaine souple (8) est conçue pour augmenter la résistance aux ultraviolets avec une enduction résistante aux ultraviolets.

7. Conduite de fluide frigorigène conformément à la revendication 1 ou 2, **caractérisée en ce que** la gaine souple (8) présente une enduction et/ou une couche laminée permettant l'augmentation du coefficient de frottement sur la face extérieure et, de préférence, la prévention de la pénétration de particules de saleté et/ou l'absorption d'humidité pendant le fonctionnement.

8. Conduite de fluide frigorigène conformément à une ou plusieurs des revendications 1 à 6, **caractérisée en ce que** la gaine souple (8) est conçue dans une variante de 48 fuseaux x 8 fils x un poids de fibre de 322 dtex.

9. Conduite de fluide frigorigène conformément à la revendication 1 ou 2, **caractérisée en ce que** la gaine souple (8) est fixée par une liaison de compression mécanique au moyen des manchons (9, 10) sur le tuyau ondulé annulaire (1) pourvu d'une pièce de raccordement métallique (2, 3), le tuyau ondulé annulaire étant de préférence composé de matériau austénitique, inoxydable.

10. Conduite de fluide frigorigène conformément à la revendication 1 à 9, **caractérisée en ce que** la gaine souple (8) est fixée par une liaison de compression mécanique au moyen des manchons (9, 10), de préférence dans le procédé par impulsions électromagnétiques (EMP), sur le tuyau ondulé annulaire (1) pourvu d'une pièce de raccordement métallique (2, 3), le tuyau ondulé annulaire étant de préférence composé de matériau austénitique, inoxydable.

11. Conduite de fluide frigorigène conformément à la revendication 1 à 10, **caractérisée en ce que** les manchons métalliques (9, 10) permettant la fixation de la gaine présentent du cuivre ou un alliage de cuivre, de préférence se composent de ces matériaux.

12. Conduite de fluide frigorigène conformément à la revendication 10 ou 11, **caractérisée en ce que** les manchons métalliques (9, 10) permettant la fixation de la gaine présentent de l'aluminium ou un alliage d'aluminium, de préférence se composent de ces matériaux.

13. Conduite de fluide frigorigène conformément à la revendication 10 ou 11, **caractérisée en ce que** les manchons métalliques (9, 10) permettant la fixation de la gaine sont pourvus d'une couche résistante à la corrosion.

14. Conduite de fluide frigorigène conformément à une ou plusieurs des revendications 1 à 13, **caractérisée en ce que** les pièces de raccordement (2, 3) et le tuyau ondulé (1) sont reliés, en particulier soudés.

15. Conduite de fluide frigorigène conformément à la revendication 12, **caractérisée en ce que** les pièces de raccordement (2, 3) font saillie dans la zone d'extrémité adjacente du tuyau ondulé (1) (sections 4, 5) et présentent un diamètre extérieur correspondant à son diamètre intérieur.

16. Conduite de fluide frigorigène conformément à la revendication 12, **caractérisée en ce que** les pièces de raccordement (2, 3) font saillie dans la zone d'extrémité adjacente du tuyau ondulé (1) (sections 4, 5) et présentent un chanfrein de moulage (11), de préférence compris entre 1° et 6°.

17. Conduite de fluide frigorigène conformément à l'une des revendications 14 à 16, **caractérisée en ce que** les pièces de raccordement (2, 3) sont en acier inoxydable.

18. Conduite de fluide frigorigène conformément à une ou plusieurs des revendications 1 à 17, **caractérisée en ce qu'**il en résulte une conduite de fluide frigorigène présentant une pression d'éclatement minimale de 34 MPa, un allongement axial ne dépassant pas 2% par rapport à la longueur initiale flexible pendant toutes les conditions de service et une force d'extraction axiale de la gaine en matière synthétique sous le manchon d'extrémité d'au moins 2 kN à température ambiante.
